# EUROPEAN PATENT SPECIFICATION

(11) **EP 2 481 895 B1**
(45) Date of publication and mention of the grant of the patent: **12.06.2019**
(21) Application number: 12153199.0
(22) Date of filing: 31.01.2012
(51) Int. Cl.: F01K 13/00, F22B 1/00, B01D 53/14, F01K 13/02, F01K 17/02, F22B 33/14, F22B 33/18

(54) **Thermal power plant with carbon dioxide capture scrubbing equipment**
Wärmekraftwerk mit Ausrüstung zur Kohlendioxidabscheidungsauswaschung
Centrale thermique avec équipement d'épuration de capture de dioxyde de carbone

(30) Priority: 31.01.2011 JP 2011017391
(43) Date of publication of application: 01.08.2012
(73) Proprietor: Mitsubishi Hitachi Power Systems, Ltd., Yokohama 220-8401 (JP)
(72) Inventor: Mishima, Nobuyoshi, Tokyo, 100-8220 (JP); Sugiura, Takashi, Tokyo, 100-8220 (JP); Sakakura, Toshihiko, Tokyo, 100-8220 (JP)
(74) Representative: MERH-IP Matias Erny Reichl Hoffmann Patentanwälte PartG mbB

(56) References cited:
- WO-A1-2008/009049
- WO-A2-2011/003892
- US-A1- 2011 011 088

## Description

### BACKGROUND OF THE INVENTION

### 1. Field of the Invention

The present invention relates to a thermal power plant, and more particularly to a fossil fuel-fired thermal power plant that includes carbon dioxide capture scrubbing equipment and a solar heat collection apparatus.

### 2. Description of the Related Art

As an example of a fossil fuel-fired thermal power plant equipped with carbon dioxide capture scrubbing equipment, there is a plant having a high pressure turbine, an intermediate pressure turbine, and a low pressure turbine, and also comprising carbon dioxide capture scrubbing equipment (Post Combustion CO₂ Capture (PPC)) that includes: steam turbine equipment driven by steam generated by a fossil fuel-fired boiler, e.g., a coal-fired boiler; an absorption tower for absorbing and removing carbon dioxide from combustion exhaust gas discharged from the boiler by using a carbon dioxide absorbent; a regeneration tower for regenerating the carbon dioxide absorbent that absorbed carbon dioxide in the absorption tower; a compressor for compressing the carbon dioxide removed in the regeneration tower; and a supply pipe for supplying part of the exhaust steam from the turbines to a reboiler of the regeneration tower as a heat source (refer to Japanese Patent No. 4274846). The carbon dioxide capture scrubbing equipment separates and captures carbon dioxide from the combustion exhaust gas discharged from the boiler.

In carbon dioxide capture scrubbing equipment as the one described in Japanese Patent No. 4274846, an absorbent circulation pump is driven to circulate the absorbent between the absorption tower and the regeneration tower. The absorbent absorbs carbon dioxide contained in the combustion gas discharged from the boiler in the absorption tower, and the carbon dioxide absorbed in the absorbent are separated and captured in the regeneration tower.

Specifically, a carbon dioxide component contained in the gas discharged from the boiler is contacted with the absorbent in the absorption tower so that the absorbent at a temperature of approximately 40°C causes a chemical reaction with the carbon dioxide in the gas (exothermic reaction) and thereby absorbs the carbon dioxide. The carbon dioxide rich absorbent, which has been increased in temperature to approximately 70°C by the chemical reaction between the absorbent and carbon dioxide, flows out from the absorption tower to heat exchange with a regenerated absorbent supplied from the regeneration tower having a temperature of approximately 120°C (hereinafter referred to as a lean absorbent). The rich absorbent is heated to approximately 110°C and then flows into the regeneration tower. The rich absorbent that has exchanged heat is further heated in the regeneration tower to approximately 120°C to 130°C so that the carbon dioxide is separated from the rich absorbent. The absorbent that had its carbon dioxide separated in the regeneration tower becomes a lean absorbent. The lean absorbent is reintroduced into the absorption tower to absorb carbon dioxide contained in the boiler exhaust gas. At this point, so as to heat the absorbent in the generation tower to separate carbon dioxide from the absorbent and change it to a lean absorbent, the reboiler supplies steam to the regeneration tower as a heat source. However, a large amount of steam needs to be supplied by the reboiler. In order for the reboiler to generate a large amount of steam, a large amount of steam needs to be supplied to the reboiler from a turbine extraction system or a turbine discharge system. However, this reduces output of the steam turbine by an amount corresponding to the steam supplied from the extraction system, which leads to a reduced turbine efficiency.

Another conventional technique which was made with consideration of the above problem is disclosed in JP-2009-543751-T. In the document, a method that extracts from a solar field a high-temperature heating medium heated by solar heat and supplies it to the reboiler is proposed.

US 2011/011088 A1 discloses the use of extraction steam for heating a reboiler of a CO2 capture system.

### SUMMARY OF THE INVENTION

In methods as the conventional technique that extracts a high-temperature heating medium heated by solar heat from a solar field and supplies the heating medium to the reboiler, solar heat is used. Hence the amount of solar radiation varies depending on the daily weather, the temperature of the heating medium that collects solar heat continuously changes. In addition, in cases where carbon dioxide capture scrubbing equipment is simultaneously operated with power generation during the nighttime as well, an alternative thermal energy that substitutes for solar thermal energy needs to be supplied to the reboiler of the regeneration tower in the carbon dioxide capture scrubbing equipment.

When the amount of heated steam that is the heating medium supplied to the reboiler from a solar heat collection apparatus fluctuates during a cloudy or rainy time, or during nighttime, the fluctuation in the amount of steam changes the temperature and pressure of the steam generated by the reboiler, and the efficiency of separating carbon dioxide gas from the absorbent in the regeneration tower will also change.

An object of the present invention is to provide a thermal power plant comprising carbon dioxide capture scrubbing equipment that can suppress reductions in the efficiency and output of the steam turbine, and at the same time, regardless of variations in the amount of heated steam supplied from a solar heat collection apparatus to the reboiler, minimize variations in the temperature and pressure of steam generated by a reboiler and stably carry out reactions for separating carbon dioxide from an absorbent in a regeneration tower.

In order to accomplish the above object, the present invention provides a thermal power plant provided with carbon dioxide capture scrubbing equipment, comprising: a boiler for burning a fossil fuel; a steam turbine driven by steam generated by the boiler; a condenser for condensing the steam used to drive the steam turbine into water; the carbon dioxide capture scrubbing equipment for separating and capturing carbon dioxide from an exhaust gas of the boiler; and/or a solar heat collection apparatus that collects solar heat to generate steam and supplies the steam to a reboiler in the carbon dioxide capture scrubbing equipment; wherein: when the amount of steam generated by the solar heat collection apparatus decreases to an amount smaller than the amount of steam required for the reboiler, extraction steam extracted from the steam turbine is supplied to the reboiler and a part of drain formed in the reboiler is collected into the condenser; and/or when the amount of steam generated by the solar heat collection apparatus exceeds the amount of steam required for the reboiler, the surplus steam bypasses the reboiler and is collected into the condenser.

According to the present invention, hence solar thermal energy which requires low energy cost is utilized, the amount of extraction steam supplied from the steam turbine to the reboiler of the regeneration tower included in the carbon dioxide capture scrubbing equipment can be reduced. Therefore, reduction in the efficiency and output of the steam turbine can be suppressed.

In addition, a thermal power plant comprising carbon dioxide capture scrubbing equipment that can, regardless of variations in the amount of heated steam supplied from a solar heat collection apparatus to the reboiler, minimize variations in the temperature and pressure of steam generated by a reboiler and stably carry out reactions for separating carbon dioxide from an absorbent in a regeneration tower, can be provided.

### BRIEF DESCRIPTION OF THE DRAWINGS

Fig. 1 is an explanatory drawing showing a system of a thermal power plant according to an embodiment of the present invention that includes carbon dioxide capture scrubbing equipment.
Fig. 2 is an explanatory drawing showing a basic control system of the thermal power plant illustrated in Fig. 1 including the carbon dioxide capture scrubbing equipment.

### DESCRIPTION OF THE PREFERRED EMBODIMENTS

An embodiment of the present invention that is a thermal power plant provided with carbon dioxide capture scrubbing equipment that uses solar thermal energy is described below with reference to the accompanying drawings. In the drawings, equivalent constituent elements are indicated by the same reference numerals.

As the embodiment of the present invention, an example where the present invention is applied to a steam power plant which is one form of thermal power generation is described below. In this embodiment, water is used as a heating medium for collecting solar thermal energy.

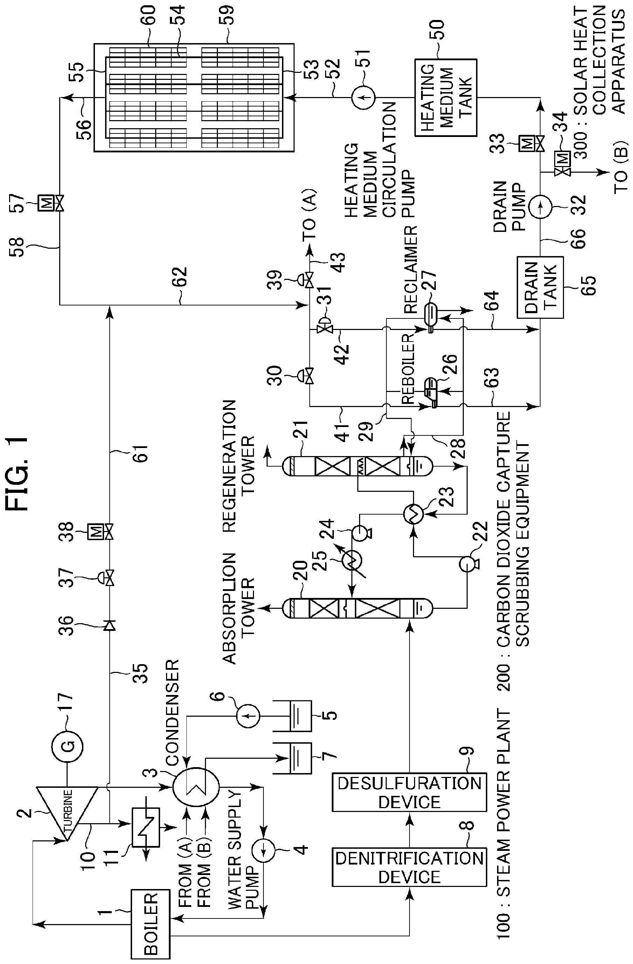

Fig. 1 is an explanatory drawing showing a system of the thermal power plant according to the embodiment that includes carbon dioxide capture scrubbing equipment. A steam power plant 100 of this embodiment is shown in Fig. 1. The steam power plant 100 includes: a boiler 1 for burning fossil fuel to generate steam; a steam turbine 2 that is rotary driven by the steam generated by the boiler 1; a power generator 17 for converting rotational force of the steam turbine 2 into electric power; a condenser 3 for condensing steam used to rotary drive the steam turbine 2 into water; and a water supply pump 4 for supplying the feed water condensed by the condenser 3 to the boiler 1. Exhaust gas from the boiler 1 passes through a denitrification device 8 and a desulfuration device 9 and flows into an absorption tower 20 of carbon dioxide capture scrubbing equipment 200.

In the absorption tower 20, carbon dioxide gas contained in the boiler exhaust gas is absorbed into a carbon dioxide absorbent. A rich absorbent that has absorbed the carbon dioxide gas from the boiler exhaust gas and containing a large amount of the carbon dioxide is sent to a rich absorbent circulation pump 22 provided on a supply route of the absorbent, whereby the rich absorbent is pressurized. After that, the rich absorbent is heated in a rich versus lean absorbent heat exchanger 23 which is also provided on the supply route of the absorbent, and then is supplied to a regeneration tower 21.

The rich absorbent sent from the absorption tower 20 to the regeneration tower 21 flows down through a regeneration tower absorbent extraction pipe 28 to a reboiler 26, whereby heated to generate steam. The steam generated in the reboiler 26 flows through a reboiler absorbent vaporization pipe 29 and is supplied to the regeneration tower 21. The steam heats the rich absorbent, whereby the absorbed carbon dioxide gas is separated from the rich absorbent inside the regeneration tower 21. When the absorbent has degraded, a reclaimer steam supply control valve 31 is opened so that heated steam is supplied to a reclaimer 27 to heat the absorbent and blow impurities contained in the absorbent to the outside of the system.

The absorbent that has been separated it's carbon dioxide gas by the heating of absorbent in the regeneration tower 21 is sent to a lean absorbent circulation pump 24 which is located on a return route of the absorbent for returning the absorbent from the regeneration tower 21 to the absorption tower 20. After being pressurized by the lean absorbent circulation pump 24, the absorbent is sent to a lean absorbent cooler 25 also located on the absorbent return route to be cooled, and then returns to the absorption tower 20. As described above, the absorbent circulates between the absorption tower 20 and the regeneration tower 21.

Next, a configuration for supplying steam which is a heat source to the reboiler 26 is described. The thermal power plant according to this embodiment provided with the carbon dioxide capture scrubbing equipment includes a solar heat collection apparatus 300 as a first heat source supply origin for the reboiler 26. The solar heat collection apparatus 300 has a solar heat collection apparatus body 59 that includes a solar heat collection mirror 60 and a solar heat collection heat transfer pipe 54. Depending on the type of the solar heat collection apparatus 300, there are several types for the solar heat collection apparatus body 59 such as a trough type, a tower type, and a Fresnel type. In this embodiment, the solar heat collection apparatus body 59 may be any of those types. In the example shown in Fig. 1, a Fresnel type is modelized.

Four solar heat collection heat transfer pipes 54 are shown in Fig. 1. Water which is the heating medium is heated in the solar heat collection heat transfer pipes 54 and becomes steam. The steam is temporarily collected into a solar heat collection apparatus outlet header 55. Then, the steam flows through a solar heat collection apparatus outlet pipe 56 towards a solar heat collection apparatus outlet valve 57. A solar heat collection apparatus side pipe 58, which joins a steam turbine extraction side pipe 61 (described later), is connected to the downstream side of the solar heat collection apparatus outlet valve 57. The two steam pipes join together to form a reboiler heating steam header 62. The reboiler heating steam header 62 is connected to the reboiler 26 and the reclaimer 27 and supplies heated steam to the reboiler 26 and the reclaimer 27.

In the thermal power plant of this embodiment comprising the carbon dioxide capture scrubbing equipment, steam extracted from a steam turbine extraction pipe 10 of the steam turbine 2 is used as a second heat source supply origin for the reboiler 26. The steam turbine extraction pipe 10 of the steam turbine 2 is connected to a feed water heater 11 provided in a feed water system of the steam turbine 2, and a steam turbine side reboiler steam supply pipe 35 branches off from the line. A part of steam extracted from the steam turbine 2 flows down from the steam turbine extraction pipe 10 through the steam turbine side reboiler steam supply pipe 35. The steam passes through a steam turbine side reboiler steam supply pipe check valve 36, a steam turbine side reboiler steam flow rate control valve 37, and a steam turbine side reboiler steam supply stop valve 38, flows down the steam turbine extraction side pipe 61 and joins steam flowing down the solar heat collection apparatus side pipe 58.

According to the above-mentioned configuration, both or either one of the steam generated by the solar heat collection apparatus 300 and flowing down the solar heat collection apparatus side pipe 58, and the steam extracted from the steam turbine 2 and flowing down the steam turbine extraction side pipe 61 can be supplied as a steam heat source for the reboiler 26 and the reclaimer 27. When it is sunny, where the amount of steam generated by the solar heat collection apparatus 300 is sufficient for the reboiler 26, preferably the steam that has flowed down the solar heat collection apparatus side pipe 58 is used rather than the steam extracted from the steam turbine 2. The amount of steam generated by the boiler 1 can be reduced, which in turn reduces the amount of fuel consumption to significantly reduce the amount of carbon dioxide emission from the boiler 1. However, when it is cloudy, rainy, or during nighttime, where the amount of steam flowing down the solar heat collection apparatus side pipe 58 decreases or stops, steam extracted from the steam turbine 2 is supplied to the reboiler 26 so that the carbon dioxide capture scrubbing equipment 200 can continue operation.

The thermal power plant of this embodiment provided with the carbon dioxide capture scrubbing equipment 200 uses, along with the steam generated by the solar heat collection apparatus 300, the steam extracted from the steam turbine 2 flowing down the steam turbine extraction side pipe 61 to indirectly heat, in the reboiler 26, the absorbent extracted from the regeneration tower 21 through the regeneration tower absorbent extraction pipe 28, thereby generating normal steam having a desired temperature and pressure. The generated steam is supplied to the regeneration tower 21 through the reboiler absorbent vaporization pipe 29.

The reboiler heating steam header 62 located upstream of the reboiler 26 and the reclaimer 27 branches into three pipes: each of the pipes is linked to a reboiler steam supply system 41, a reclaimer steam supply system 42, and a solar heat collection surplus steam release system 43. The solar heat collection surplus steam release system 43 is connected to the condenser 3. Of the steam generated by the solar heat collection apparatus 300, the amount of surplus steam exceeding the amount of steam requested by the reboiler 26 is released to the condenser 3 through the solar heat collection surplus steam release system 43.

In addition, the solar heat collection surplus steam release system 43 can be utilized when the carbon dioxide capture scrubbing equipment 200 trips or makes an emergency stop for some reason. The extraction steam from the solar heat collection apparatus 300 can be released as an emergency measure to the condenser 3 by opening a solar heat collection surplus steam release valve 39. This allows quick cooling and stopping of the solar heat collection apparatus 300.

In the reboiler 26, saturated steam is cooled to become saturated drain. The saturated drain flows through a reboiler drain pipe 63 and is introduced into a drain tank 65 provided downstream of the reboiler 26. Similarly, in the reclaimer 27 which operates intermittently, saturated steam is cooled to become saturated drain and the drain flows through a reclaimer drain pipe 64 to be introduced into the drain tank 65. Drain sent out from the drain tank 65 flows through a drain pump inlet pipe 66, pressurized by a drain pump 32, and then is delivered to the solar heat collection apparatus 300. The drain discharged from the drain pump 32 passes through a drain pump outlet valve 33 and is collected into a heating medium tank 50 installed in the solar heat collection apparatus 300. The heating medium is pressurized by a heating medium circulation pump 51 and supplied to a solar heat collection apparatus inlet header 53 through a solar heat collection apparatus inlet pipe 52. The heating medium is separated by the solar heat collection apparatus inlet header 53 to correspond with the number of the solar heat collection heat transfer pipes 54.

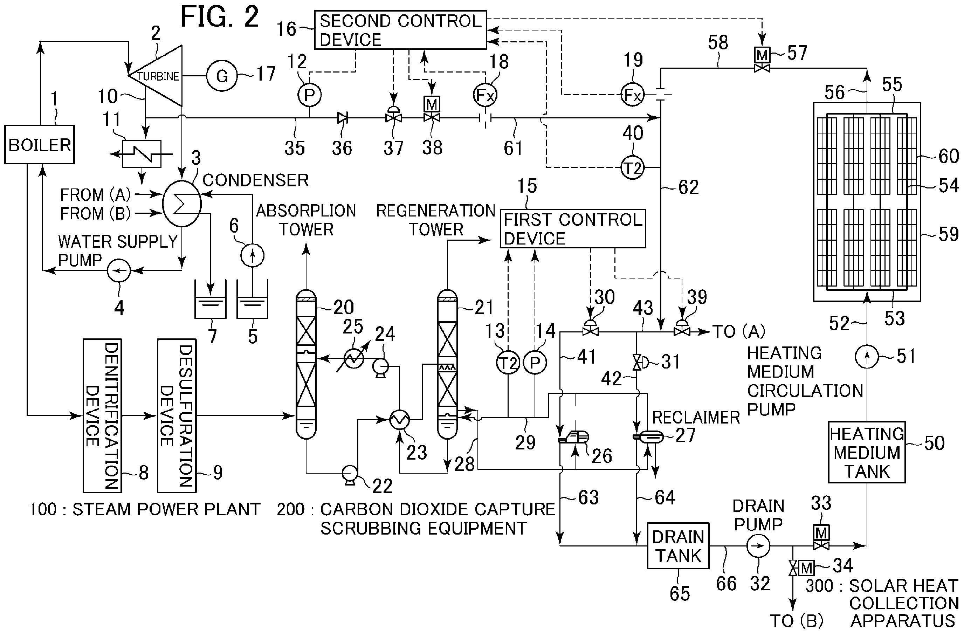

Fig. 2 is a control system explanatory drawing showing an outline of a basic control system of the thermal power plant shown in Fig. 1 including the carbon dioxide capture scrubbing equipment.

A reboiler generated steam control device 15, i.e., a first control device, is a device for controlling the temperature and pressure of the steam generated in the reboiler 26. A reboiler heating steam source switching control device 16, i.e., a second control device, is a device for controlling and switching the origin of reboiler heating steam. Steam generated by using solar heat in the solar heat collection apparatus 300 flows down the solar heat collection apparatus side pipe 58 to the reboiler 26. The reboiler generated steam control device 15 monitors the temperature and pressure of the steam generated by the reboiler 26 by using a reboiler generated steam temperature detector 13 and a reboiler generated steam pressure detector 14 attached to the reboiler absorbent vaporization pipe 29. When there is an excess or insufficiency in the temperature or pressure of the generated steam relative to predetermined values, as to correct it, the reboiler generated steam control device 15 outputs an opening/closing control signal to a reboiler steam supply control valve 30 provided in the reboiler steam supply system 41 according to the amount of excess or insufficiency. Adjustment of the amount of steam supplied from the solar heat collection apparatus 300 to the reboiler 26 can be controlled by this operation. In addition, when the amount of the steam supplied from the solar heat collection apparatus 300 is excessive, the solar heat collection surplus steam release valve 39 provided in the solar heat collection surplus steam release system 43 is opened to discharge and collect surplus steam into the condenser 3. The steam that passed through the reboiler steam supply system 41 converts into drain in the reboiler 26. The drain flows through the reboiler drain pipe 63 to be temporarily stored in the drain tank 65. After that, the drain is supplied to the solar heat collection apparatus 300 by the drain pump 32.

Steam generated in the solar heat collection apparatus 300 by solar heat flows through the solar heat collection apparatus side pipe 58, the reboiler heating steam header 62, and the reboiler steam supply system 41 and enters the reboiler 26. At this time, the flow rate of the generated steam is constantly measured by a solar heat collection steam flow meter 19 provided on the solar heat collection apparatus side pipe 58. From the time where the sun shifts from daytime to nighttime and during nighttime operation, it can be expected that the amount of generated steam would be short relative to the amount of steam requested by the reboiler 26 of the carbon dioxide capture scrubbing equipment 200. In order to cope with this, when the amount of the generated steam from the solar heat collection apparatus 300 begins to fall short, the second control device 16 performs control to switch the source of steam to the turbine extraction steam so that steam is supplied to the reboiler 26 through the steam turbine side reboiler steam supply pipe 35 branching off from the steam turbine extraction pipe 10. Specifically, the second control device 16 receives from a steam turbine extraction pressure detector 12 a detection signal indicating the steam turbine extraction pressure and confirms that the pressure is sufficient. Then, the second control device 16 closes the solar heat collection apparatus outlet valve 57 and opens the steam turbine side reboiler steam supply stop valve 38. The flow rate of the supplied steam deriving from the turbine 2 is detected by a steam turbine steam flow meter 18. When the steam turbine extraction pressure decreases by a planned value or less, the flow rate of the supply steam is reduced by the steam turbine side reboiler steam flow rate control valve 37, thereby preventing an extraordinary decrease of the steam turbine extraction pressure that exceeds the planned value. In order to prevent back-flow of the steam from the reboiler side to the steam turbine side at when the steam turbine 2 has tripped, the steam turbine side reboiler steam supply pipe check valve 36 is provided on the steam turbine side reboiler steam supply pipe 35.

An outlet pipe of the drain pump 32 branches into a system connected to the solar heat collection apparatus 300 and a system connected to the condenser 3. When steam is extracted from the steam turbine as a steam source for the reboiler 26, a drain pump outlet blow valve 34 is opened as to collect the drain of the heating steam that passed through the reboiler 26 into the condenser 3.

The two steam, the turbine extraction steam supplied through the turbine extraction side pipe 61 and the steam generated by solar heat and supplied through the solar heat collection apparatus side pipe 58, merge in the reboiler heating steam header 62 and mix with each other so that their temperatures are sufficiently averaged. The average temperature is detected by a thermometer located on the reboiler heating steam header 62, i.e., a mixed steam temperature detector 40 for detecting after the turbine side steam and solar heat side steam have merged. This signal is transmitted to the reboiler heating steam source switching control device 16, and the control device 16 performs control to open/close the control valve opening degree of the steam turbine side reboiler steam flow rate control valve 37 with reference to the feedback signal so that the steam temperature after merging equals a predetermined temperature. As described above, the turbine extraction steam and the solar heat collection apparatus side steam are sufficiently mixed with each other. This enables to minimize fluctuation in the temperature of the steam supplied from the solar heat collection apparatus 300 which is liable to fluctuate due to changes in weather. As a result, steam that is constantly not influenced by the change in weather and whose temperature is controlled to a temperature requested be the reboiler 26 can be supplied to the reboiler 26 through the reboiler steam supply control valve 30.

According to the configuration of this embodiment, hence solar thermal energy which requires low energy cost is utilized, the amount of extraction steam supplied from the steam turbine to the reboiler of the regeneration tower included in the carbon dioxide capture scrubbing equipment can be reduced. Therefore, reduction in the efficiency and output of the steam turbine can be suppressed. In addition, a thermal power plant comprising carbon dioxide capture scrubbing equipment that can, regardless of variations in the amount of heated steam supplied from a solar heat collection apparatus to the reboiler, minimize variations in the temperature and pressure of steam generated by a reboiler and stably carry out reactions for separating carbon dioxide from an absorbent in a regeneration tower, can be provided.

The present invention can also be applied to, instead of applying to a steam power plant, a device for a combined power plant employing a gas turbine for separating and capturing carbon dioxide from gas turbine exhaust gas.

## Claims

1. A thermal power plant provided with carbon dioxide capture scrubbing equipment (200), comprising:
a boiler (1) for burning a fossil fuel;
a steam turbine (2) suitable for being driven by steam generated by the boiler (1);
a condenser (3) for condensing the steam used to drive the steam turbine (2) into water;
the carbon dioxide capture scrubbing equipment (200) for separating and capturing carbon dioxide from an exhaust gas of the boiler (1); and
a solar heat collection apparatus (300) that, during operation, collects solar heat to generate steam and supplies the steam to a reboiler (26) in the carbon dioxide capture scrubbing equipment (200);
wherein the thermal power plant is **characterized by** being configured such that:
when the amount of steam generated by the solar heat collection apparatus (300) falls below the amount of steam required for the reboiler (26), extraction steam extracted from the steam turbine (2) is supplied to the reboiler (26) and a part of drain generated in the reboiler (26) is collected into the condenser (3); and
when the amount of steam generated by the solar heat collection apparatus (300) exceeds the amount of steam required for the reboiler (26), surplus steam of the solar heat collection apparatus (300) is collected into the condenser (3) with bypassing the reboiler (26).

2. The thermal power plant according to claim 1, further comprising a flow rate control valve for reducing a flow rate of extraction steam when the pressure of the extraction steam decreases by a predetermined value or less.

3. The thermal power plant according to claim 1 or 2, further comprising a steam system for releasing steam generated by the solar heat collection apparatus (300) to the condenser (3) when the carbon dioxide capture scrubbing equipment (200) makes an emergency stop.

4. The thermal power plant according to at least one of claims 1 to 3, further comprising a steam system for mixing extraction steam extracted from the steam turbine (2) with steam generated by the solar heat collection apparatus (300) and supplying the mixed steam to the reboiler (26).

5. The thermal power plant according to claim 1, further comprising:
a first steam system (41) for supplying steam generated by the solar heat collection apparatus (300) to the reboiler (26);
measurement means for measuring the amount of steam flowing down the first steam system;
a second steam system (42) for introducing at least part of extraction steam extracted from the steam turbine (2) into the first steam system (41) so that the extracted steam joins the steam flowing down the first steam system (41);
a first flow rate control valve provided in the second steam system (42), the first flow rate control valve controlling a flow rate of the extraction steam flowing down the second steam system (42);
a third steam system (43) for supplying part of the steam flowing down the first steam system to the condenser (3);
a second flow rate control valve provided in the third steam system (43), the second flow rate control valve controlling a flow rate of the steam flowing down the third steam system (43);
a first drain supply system for supplying drain formed in the reboiler (26) to the solar heat collection apparatus (300);
a second drain supply system for supplying part of the drain flowing down the first drain supply system to the condenser (3);
a third flow rate control valve provided in the second drain supply system, the third flow rate control valve controlling a flow rate of the drain flowing down the second drain supply system; and
control means for performing opening control on the first and third flow rate control valves when the amount of steam measured by the measurement means decreases to an amount lower than the amount of steam required for the reboiler (26), and performing opening control on the second flow rate control valve when the amount of steam measured by the measurement means exceeds the amount of steam required for the reboiler (26).

6. The thermal power plant according to claim 5, further comprising control means for reducing the opening degree of the first flow rate control valve when the pressure of the extraction steam flowing down the second steam system decreases by a predetermined value or less.

7. The thermal power plant according to claim 5 or 6, further comprising control means for controlling the opening degree of the second flow rate control valve provided in the third steam system when the carbon dioxide capture scrubbing equipment (200) makes an emergency stop.

## Patentansprüche

1. Wärmekraftwerk, das mit einer Kohlendioxideinfangwäscheanlage (200) versehen ist und das Folgendes umfasst:
einen Kessel (1), um einen fossilen Brennstoff zu verbrennen;
eine Dampfturbine (2), die geeignet ist, durch Dampf, der durch den Kessel (1) erzeugt wird, angetrieben zu werden;
einen Kondensator (3), um den Dampf, der verwendet wird, um die Dampfturbine (2) anzutreiben, in Wasser zu kondensieren;
die Kohlendioxideinfangwäscheanlage (200), um Kohlendioxid aus einem Abgas des Kessels (1) abzuscheiden und einzufangen; und
eine Solarwärmesammelvorrichtung (300), die während des Betriebs Solarwärme sammelt, um Dampf zu erzeugen, und den Dampf einem Nachverdampfer (26) in der Kohlendioxideinfangwäscheanlage (200) zuführt; wobei
das Wärmekraftwerk **dadurch gekennzeichnet ist, dass**
dann, wenn die Menge von Dampf, die durch die Solarwärmesammelvorrichtung (300) erzeugt wird, unter die Menge von Dampf, die für den Nachverdampfer (26) erforderlich ist, fällt, Extraktionsdampf, der aus der Dampfturbine (2) extrahiert wird, dem Nachverdampfer (26) zugeführt wird und ein Teil des Abflusses, der im Nachverdampfer (26) erzeugt wird, im Kondensator (3) gesammelt wird und
dann, wenn die Menge von Dampf, die durch die Solarwärmesammelvorrichtung (300) erzeugt wird, die Menge von Dampf, die für den Nachverdampfer (26) erforderlich ist, überschreitet, Überschussdampf der Solarwärmesammelvorrichtung (300) unter Umgehung des Nachverdampfers (26) im Kondensator (3) gesammelt wird.

2. Wärmekraftwerk nach Anspruch 1, das ferner ein Durchflussmengensteuerventil umfasst, um eine Durchflussmenge von Extraktionsdampf zu verringern, wenn der Druck des Extraktionsdampfs um einen vorgegebenen Wert oder weniger abnimmt.

3. Wärmekraftwerk nach Anspruch 1 oder 2, das ferner ein Dampfsystem umfasst, um Dampf, der durch die Solarwärmesammelvorrichtung (300) erzeugt wird, zum Kondensator (3) abzugeben, wenn die Kohlendioxideinfangwäscheanlage (200) eine Notabschaltung durchführt.

4. Wärmekraftwerk nach mindestens einem der Ansprüche 1 bis 3, das ferner ein Dampfsystem umfasst, um Extraktionsdampf, der aus der Dampfturbine (2) extrahiert wird, mit Dampf, der durch die Solarwärmesammelvorrichtung (300) erzeugt wird, zu mischen und den gemischten Dampf dem Nachverdampfer (26) zuzuführen.

5. Wärmekraftwerk nach Anspruch 1, das ferner Folgendes umfasst:
ein erstes Dampfsystem (41), um Dampf, der durch die Solarwärmesammelvorrichtung (300) erzeugt wird, dem Nachverdampfer (26) zuzuführen;
Messmittel, um die Menge von Dampf, die das erste Dampfsystem hinabfließt, zu messen;
ein zweites Dampfsystem (42), um mindestens einen Teil von Extraktionsdampf, der aus der Dampfturbine (2) extrahiert wurde, in das erste Dampfsystem (41) derart einzuleiten, dass der extrahierte Dampf sich mit dem Dampf, der das erste Dampfsystem (41) hinabfließt, verbindet;
ein erstes Durchflussmengensteuerventil, das im zweiten Dampfsystem (42) vorgesehen ist, wobei das erste Durchflussmengensteuerventil eine Durchflussmenge des Extraktionsdampfs, der das zweite Dampfsystem (42) hinabfließt, steuert;
ein drittes Dampfsystem (43), um einen Teil des Dampfs, der das erste Dampfsystem hinabfließt, dem Kondensator (3) zuzuführen;
ein zweites Durchflussmengensteuerventil, das im dritten Dampfsystem (43) vorgesehen ist, wobei das zweite Durchflussmengensteuerventil eine Durchflussmenge des Dampfs, der das dritte Dampfsystem (43) hinabfließt, steuert;
ein erstes Abflusszufuhrsystem, um Abfluss, der im Nachverdampfer (26) gebildet wird, der Solarwärmesammelvorrichtung (300) zuzuführen;
ein zweites Abflusszufuhrsystem, um einen Teil des Abflusses, der das erste Abflusszufuhrsystem hinabfließt, dem Kondensator (3) zuzuführen;
ein drittes Durchflussmengensteuerventil, das im zweiten Abflusszufuhrsystem vorgesehen ist, wobei das dritte Durchflussmengensteuerventil eine Durchflussmenge des Abflusses, der das zweite Abflusszufuhrsystem hinabfließt, steuert; und
ein Steuermittel, um eine Öffnungssteuerung am ersten und am dritten Durchflussmengensteuerventil durchzuführen, wenn die Menge von Dampf, die durch das Messmittel gemessen wird, auf eine Menge, die geringer als die Menge von Dampf, die für den Nachverdampfer (26) erforderlich ist, ist, abnimmt, und eine Öffnungssteuerung am zweiten Durchflussmengensteuerventil durchzuführen, wenn die Menge von Dampf, die durch das Messmittel gemessen wird, die Menge von Dampf, die für den Nachverdampfer (26) erforderlich ist, überschreitet.

6. Wärmekraftwerk nach Anspruch 5, das ferner ein Steuermittel umfasst, um den Öffnungsgrad des ersten Durchflussmengensteuerventils zu verringern, wenn der Druck des Extraktionsdampfs, der das zweite Dampfsystem hinabfließt, um einen vorgegebenen Wert oder weniger abnimmt.

7. Wärmekraftwerk nach Anspruch 5 oder 6, das ferner ein Steuermittel umfasst, um den Öffnungsgrad des zweiten Durchflussmengensteuerventils, das im dritten Dampfsystem vorgesehen ist, zu steuern, wenn die Kohlendioxideinfangwäscheanlage (200) eine Notabschaltung durchführt.

## Revendications

1. Centrale thermique de production d'énergie équipée d'un équipement d'épuration et de capture de dioxyde de carbone (200), comprenant :
une chaudière (1) pour faire brûler un combustible fossile ;
une turbine à vapeur (2) appropriée pour être entraînée par de la vapeur générée par la chaudière (1) ;
un condenseur (3) pour faire condenser la vapeur utilisée pour entraîner la turbine à vapeur (2) en donnant de l'eau ;
l'équipement d'épuration et de capture de dioxyde de carbone (200) destiné à séparer et à capturer le dioxyde de carbone hors des gaz d'échappement de la chaudière (1) ; et
un appareil de collecte de chaleur solaire (300) qui, pendant le fonctionnement, collecte de la chaleur solaire pour générer de la vapeur et fournit la vapeur à un réchauffeur (26) dans l'équipement d'épuration et de capture de dioxyde de carbone (200) ;
dans laquelle la centrale thermique de production d'énergie est **caractérisée en ce qu'**elle est configurée de telle façon que :
quand la quantité de vapeur générée par l'appareil de collecte de chaleur solaire (300) tombe au-dessous de la quantité de vapeur requise pour le réchauffeur (26), de la vapeur extraite qui est extraite hors de la turbine à vapeur (2) est fournie au réchauffeur (26) et une partie du drainage généré dans le réchauffeur (26) est collectée dans le condenseur (3) ; et
quand la quantité de vapeur générée par l'appareil de collecte de chaleur solaire (300) excède la quantité de vapeur requise pour le réchauffeur (26), la vapeur en surplus de l'appareil de collecte de chaleur solaire (300) est collectée dans le condenseur (3) en by-passant le réchauffeur (26).

2. Installation thermique de production d'énergie selon la revendication 1, comprenant en outre une vanne de commande de débit pour réduire un débit de vapeur extraite quand la pression de la vapeur extraite diminue à raison d'une valeur prédéterminée ou moins.

3. Installation thermique de production d'énergie selon la revendication 1 ou 2, comprenant en outre un système à vapeur pour dégager de la vapeur générée par l'appareil de collecte de chaleur solaire (300) vers le condenseur (3) quand l'équipement d'épuration et de carbure de dioxyde de carbone (200) exécute un arrêt d'urgence.

4. Installation thermique de production d'énergie selon l'une au moins des revendications 1 à 3, comprenant en outre un système à vapeur pour mélanger la vapeur extraite qui est extraite hors de la turbine à vapeur (2) avec la vapeur générée par l'appareil de collecte de chaleur solaire (300), et pour alimenter la vapeur mélangée au réchauffeur (26).

5. Installation thermique de production d'énergie selon la revendication 1, comprenant en outre :
un premier système à vapeur (41) pour alimenter la vapeur générée par l'appareil de collecte de chaleur solaire (300) au réchauffeur (26) ;
un moyen de mesure pour mesurer la quantité de vapeur qui s'écoule dans le premier système à vapeur ;
un second système à vapeur (42) pour introduire au moins une partie de la vapeur extraite qui est extraite hors de la turbine à vapeur (2) jusque dans le premier système à vapeur (41) de sorte que la vapeur extraite rejoint la vapeur qui s'écoule du premier système à vapeur (41) ;
une première vanne de commande de débit prévue dans le second système à vapeur (42), la première vanne de commande de débit commandant un débit de la vapeur extraite qui s'écoule du second système à vapeur (43) ;
un troisième système à vapeur (43) pour alimenter une partie de la vapeur qui s'écoule du premier système à vapeur vers le condenseur (3) ;
une seconde vanne de commande de débit prévue dans le troisième système à vapeur (43), la seconde vanne de commande de débit commandant un débit de la vapeur qui s'écoule du troisième système à vapeur(43) ;
un premier système d'alimentation de drainage pour alimenter le drainage formé dans le réchauffeur (26) vers l'appareil de collecte de chaleur solaire (300) ;
un second système d'alimentation de drainage pour alimenter une partie du drainage qui s'écoule du premier système d'alimentation de drainage vers le condenseur (3) ;
une troisième vanne de commande de débit prévue dans le second système d'alimentation de drainage, la troisième vanne de commande de débit commandant un débit du drainage qui s'écoule du second système d'alimentation de drainage ; et
un moyen de commande pour effectuer une commande d'ouverture sur la première et la troisième vanne de commande de débit quand la quantité de vapeur mesurée par le moyen de mesure diminue à une quantité plus basse que la quantité de vapeur requise pour le réchauffeur (26), et effectuant une commande d'ouverture sur la seconde vanne de commande de débit quand la quantité de vapeur mesurée par le moyen de mesure excède la quantité de vapeur requise pour le réchauffeur (26).

6. Installation thermique de production d'énergie selon la revendication 5, comprenant en outre un moyen de commande pour réduire le degré d'ouverture de la première vanne de commande de débit quand la pression de la vapeur extraite qui s'écoule du second système à vapeur diminue à raison d'une valeur prédéterminée ou moins.

7. Installation thermique de production d'énergie selon la revendication 5 6, comprenant en outre un moyen de commande pour commander le degré d'ouverture de la seconde vanne de commande de débit prévue dans le troisième système à vapeur quand l'équipement d'épuration et de capture de dioxyde de carbone (200) exécute un arrêt d'urgence.
